# EUROPEAN PATENT SPECIFICATION

(11) **EP 3 055 978 B1**
(45) Date of publication and mention of the grant of the patent: **27.02.2019**
(21) Application number: 14851506.7
(22) Date of filing: 07.10.2014
(51) Int. Cl.: H04L 29/08

(54) **SYSTEMS, METHODS, AND COMPUTER PROGRAM PRODUCTS FOR MANAGING COMMUNICATIONS**
SYSTEME, VERFAHREN UND COMPUTERPROGRAMMPRODUKTE ZUR VERWALTUNG VON KOMMUNIKATIONEN
SYSTÈMES, PROCÉDÉS ET PRODUITS-PROGRAMMES INFORMATIQUES DE GESTION DE COMMUNICATIONS

(30) Priority: 10.10.2013 US 201361889233 P; 08.11.2013 US 201361901662 P
(43) Date of publication of application: 17.08.2016
(73) Proprietor: Google LLC, Mountain View, CA 94043 (US)
(72) Inventor: VAN HOEK, Bart S., Dallas, TX 75204 (US)
(74) Representative: Maikowski & Ninnemann Patentanwälte Partnerschaft mbB
(86) International application number: PCT/US2014/059432
(87) International publication number: WO 2015/054206

(56) References cited:
- WO-A1-2012/139623
- US-A1- 2010 211 504
- US-A1- 2011 306 318
- US-A1- 2012 143 706
- US-A1- 2012 172 089
- US-A1- 2012 254 394
- US-A1- 2012 314 859
- US-A1- 2013 111 546

## Description

### BACKGROUND

### Field

The present invention relates to mobile networks, and more particularly to systems, methods, and computer program products for managing communications including establishing a communication channel.

### Related Art

A service provider (SP) is a company, organization, entity, or the like, that provides services to customers or consumers. Examples of service providers include account-issuing entities such as merchants, card associations, banks, marketing companies, and transit authorities. A service may be an activity, capability, functionality, work, or use that is permitted or provided by a service provider such as a payment service, a ticketing service, a gift, offer or loyalty service, a transit pass service, and the like. A service may be used via a mobile device, for example, by utilizing one or more applets that make up that service.

In a mobile environment that involves contactless transactions between mobile devices and service providers, information relating to the accounts and applets issued by the service providers is downloaded onto mobile devices in order to enable them to perform the contactless transactions.

-A trusted service manager (TSM) is typically an independent entity serving mobile network operators (MNOs) and account-issuing service providers, for example, by provisioning applets, such as contactless applets associated with the service providers, to mobile devices. Typical TSMs can distribute and manage the contactless applets remotely because they have access to secure elements (SEs) associated with a near field communication (NFC) enabled mobile device.

A secure element is a platform onto which applets can be installed, upgraded, and managed. It consists of hardware, software, interfaces, and protocols that enable the secure storage of data such as credentials, and execution of applets for payment, authentication, and other services. An applet or set of applets may correspond to a service (e.g., payment, commerce, ticketing) offered by a service provider.

The secure element may be implemented in different form factors such as a Universal Integrated Circuit Card (UICC), an embedded secure element, or NFC enablers such as a separate chip or secure device, which can be inserted into a slot on the mobile device. Typically a UICC is in the form of a subscriber identity module (SIM), which is controlled by the MNOs. An embedded secure element gives service providers the option to embed the secure element into the phone itself. One way in which secure element form factors are implemented is defined, for example, by GlobalPlatform, such as in GlobalPlatform Card Specification Versions 2.1.1, 2.2, and 2.2.1 (hereinafter "Global Platform").

A secure element may also be implemented outside of the mobile device with which it may be associated with. For example, such a secure element may be implemented in cloud-based, remote or virtual storage, and the like.

A secure element may include one or more security domains (SDs), each of which includes a collection of data, such as packages, applets, and the like, that trust a common entity (e.g., are authenticated or managed by using a common security key or token).

Security domains may be associated with service providers and may include service provider applets such as loyalty, couponing, credit card, and transit applets.

A central TSM is a system for interfacing (e.g., communicating, beginning a dialog) service providers and secure elements, for example for service providers to upgrade services on a secure element, transmit scripts to be processed, and the like. An exemplary embodiment of a central TSM for managing communications between service providers and secure elements is described in more detail in U.S. Pat. Appln. No. 13/653,160 entitled "Systems, Methods, and Computer Program Products for Interfacing Multiple Service Provider Trusted Service Managers and Secure Elements,".

An enterprise service bus (ESB) is an architecture model for implementing the interactions and communications between entities (e.g., mobile device, SP TSMs, central TSM).

Short Message Service (SMS) represents a way of communication by text message between communication systems such as mobile devices, using a standardized protocol such as Short Message Peer-to-Peer (SMPP). Using the SMPP protocol, SMS messages are sent through a Short Message Service Center (SMSC) of a subscriber's MNO, which acts as a center for storing, forwarding, converting, and delivering the messages.

SMS may be used for multiple purposes including, for example, sending binary data content in messages, such as over-the-air (OTA) configuration messages for mobile device management purposes (*e*.*g*., phone configuration messages or notifications for voice mail, email, payments).

Traditionally, OTA programming (*e*.*g*., communications using a wireless medium) capabilities include the ability to request certain action to be taken on a secure element associated with a mobile device through binary class 2 SMS messages (referred to sometimes simply as binary SMS messages). For example, requested actions may include commands to: remotely configure mobile devices, send software and operating system (OS) updates to mobile devices, remotely lock and wipe devices, and remotely troubleshoot mobile devices.

The OTA commands are sent as binary class 2 SMS messages, for example, via Hypertext Transfer Protocol (HTTP) or Hypertext Transfer Protocol Secure (HTTPS). The binary SMS message has a maximum of 140 bytes of usable data. This amount of bytes is typically split into two components: a user data header (UDH) and actual content data. The UDH is used to inform mobile devices, for example, about the type of data being sent.

Such binary SMS messaging is considered to be less reliable than other forms of communication due to, for example, low bandwidth and variable latency. Periodically, for instance, in a case of message delivery failure (e.g., due to an unreliable or slow SMS network), a user device must wait an extended period of time to receive feedback from a system requesting an action. Generally, users of such devices do not wish to depend on a slow, unreliable SMS network, particularly for business-critical processes.

In addition, some operations performed by a secure element are not visible to the user of the device, making it difficult to track the operations of the secure element. For example, the class 2 SMS message is directly forwarded to a secure element, and is not displayed on the display of the mobile device. Therefore, a user has no way of knowing if the class 2 SMS message(s) sent OTA has been properly executed.

That is, because the MNO carrier is in control, in OTA operations, it is difficult for the user to validate whether another device has received a message, or if an error or failure occurred during delivery of the message, for example.

One technical challenge involves providing the user with increased visibility to the data arriving at the secure element and increased control over the components associated with establishing a secure communication channel. WO 2012/139623 A1 relates to a method executed by a mobile device, comprising accessing first registration data based on first unique subscriber data of a subscriber identity module application, and registering to the registration server using the first unique subscriber data. In order to provide dual access, the method comprises establishing a connection to an application server comprising second unique subscriber data via the communication network, and accessing second registration data based on the second unique subscriber data to be used for a second registration. US 2012/0143706 A1 describes a mobile payment method and system that facilitate efficient and secured payment transactions from an electronic wallet on a user mobile electronic device with a merchant point of sale terminal over a contactless communications link.

### BRIEF DESCRIPTION

The invention is set out in the independent claims. Preferred embodiments of the invention are outlined in the dependent claims. The present invention provides systems, methods, and computer program products for managing communications including establishing a communication channel and verifying secure channel establishment by using APDU commands.

In one embodiment, a system (e.g., a secure element) for managing communications includes a processor coupled to a memory (e.g., on the secure element). The memory stores a first applet and a second applet. The first applet receives and transmits application protocol data unit (APDU) messages. The processor receives from a mobile device, by the first applet, a first APDU message, the first APDU message including payload data, transmits the first APDU message from the first applet to the second applet, and establishes, by the second applet, a communication channel with a first device. The payload data includes at least one of a host address, a recipient internet protocol address and an identification number.

In another embodiment, a method for managing communications includes receiving from a mobile device, by a first applet, a first application protocol data unit (APDU) message, the first APDU message including payload data, transmitting the first APDU message from the first applet to a second applet, and establishing, by the second applet, a communication channel with a first device. The payload data includes at least one of a host address, a recipient internet protocol address and an identification number.

In another embodiment, a non-transitory computer-readable medium having stored thereon sequences of instructions, the sequences of instructions including instructions, which, when executed by a computer system cause the computer to: receive from a mobile device, by a first applet, a first application protocol data unit (APDU) message, transmit the first APDU message from the first applet to a second applet, and establish, by the second applet, a communication channel with a first device. The payload data includes at least
one of a host address, a recipient internet protocol address and an identification number.

### BRIEF DESCRIPTION OF THE DRAWINGS

The features and advantages of the present invention will become more apparent from the detailed description set forth below when taken in conjunction with the following drawings.
Figure 1 is a diagram of a system for interfacing between service providers and mobile devices having secure elements according to an exemplary embodiment.
Figure 2 is a diagram of a system for interfacing between a trusted service manager and a mobile device having a secure element according to an exemplary embodiment.
Figure 3 is a sequence diagram illustrating a sequence for providing establishing a communication channel according to an exemplary embodiment.
Figure 4 is a block diagram of an exemplary system useful for implementing the present invention.

### DETAILED DESCRIPTION

### Overview

The example embodiments presented herein describe systems, methods, and computer program products for managing communications including establishing a communication channel, which are described herein in terms of an example system in a mobile commerce environment.

Generally, a system such as an ESB, communicating with a TSM can be used to send the push notifications.

The terms "applet," "application," and/or the plural form of these terms are used interchangeably herein to refer to an applet (functioning independently or in conjunction with other applets) or set or subset of instructions or code, which when executed by one or more processors (e.g., in a mobile device, card reader, terminal, point of sale (POS) system, or server) causes the processor(s) to perform specific tasks. It should be understood that "applets" as used herein refers to generic or instances of applets on a secure element.

In one exemplary embodiment, the TSM may transmit a request to the ESB to trigger an action to be performed on a secure element. In response, the TSM transmits SMPP payload data with certain parameters included in the request (*e*.*g*., a host address, a recipient internet protocol address, and an identification number) to the ESB. The ESB in turn forwards the SMPP payload to an SMS aggregator, which sends a push notification to the mobile device.

In another exemplary embodiment, the first applet queries the second applet to determine whether a communication channel has been established successfully, without the need to rely on intermediary sources such as an MNO carrier, for example, to send a push notification.

As a result, visibility regarding the data arriving at the secure element and control over the components associated with establishing a secure communication channel in executing a requested action to be performed on the secure element is increased relative to, for example, a system waiting for a response from the MNO carrier. Moreover, message delays and losses can be minimized or eliminated.

### System

### A. System Overview

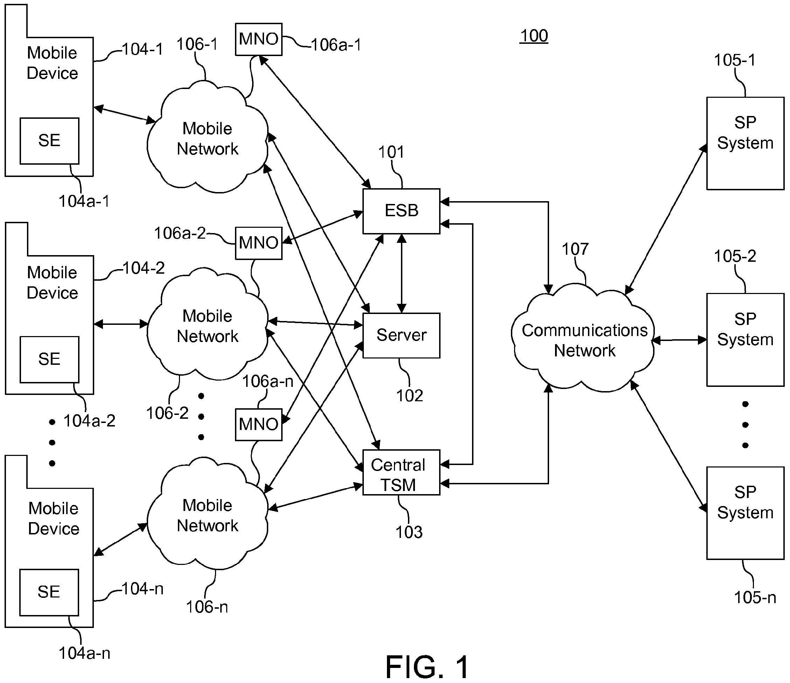

FIG. 1 is a diagram of an exemplary system 100 for interfacing between service providers and mobile devices having secure elements according to an exemplary embodiment. As shown in FIG. 1, system 100 includes an ESB 101, which is communicatively coupled to a server 102 (which may also be referred to as a "wallet server" or "mobile wallet server") and a central TSM 103.

In exemplary embodiments described herein, the central TSM 103 includes a processor and a memory (*e*.*g*., a database) and handles, for example, the installation and upgrading of services on secure elements.

The ESB 101 is communicatively coupled to SP systems 105-1, 105-2, ..., 105-n (collectively "105") via a communications network 107. Communications network 107 may be a virtual private network (VPN), a network using Transmission Control Protocol/Internet Protocol (TCP/IP) standards, or the like.

Generally, the ESB 101 manages interactions between SP systems 105 and mobile devices 104-1, 104-2, ..., 104-n (collectively "104"), and grants the SP systems the ability to efficiently and securely communicate with the mobile devices 104 in order to, for example, upgrade a service without the need for directly communicating with each of the mobile devices 104.

In an example embodiment, the ESB 101 is hardware and/or software that is implemented to serve as an intermediary between SP systems 105 and mobile devices 104, for example, for processing requests (*e*.*g*., to upgrade a service) within a mobile commerce system.

In another example embodiment, the processes and functions described below with reference to an ESB (*e*.*g*., ESB 101) can be performed by a TSM (*e*.*g*., central TSM 103).

The server 102 and the central TSM 103 are each communicatively coupled to mobile devices 104 via corresponding mobile networks 106-1, 106-2, ..., 106-n (collectively "106"). Each of the mobile networks 106 is operated by a corresponding MNO 106a-1, 106a-2, ..., 106a-n (collectively "106a").

The server 102 and the central TSM 103 communicate with mobile devices 104 via the mobile networks 106, using security protocols such as Global Platform secure channel protocol, SSL, TLS, or the like. Mobile networks 106 may be mobile phone cellular networks, radio networks, or the like.

In one exemplary embodiment, the ESB 101, server 102 and central TSM 103 may be part of a single system architecture managed by a single provider, such as a mobile wallet provider.

Each of the mobile devices 104 includes a corresponding secure element 104a-1, 104a-2, ..., 104a-n (collectively "104a"), and a corresponding mobile wallet (not shown).

A mobile wallet is an application stored in a non-transitory memory of a mobile device including instructions which, when executed by the processor of a mobile device, cause the mobile device to act as an instrument, for example, for processing contactless transactions or for processing commerce information such as offer or loyalty information. A mobile wallet and a corresponding secure element may communicate using International Organization for Standardization (ISO) 7816 commands, in order to conduct contactless transactions.

Each of the mobile devices 104 may include a user interface such as a display for receiving inputs from and outputting data to a user.

### B. Mobile Device

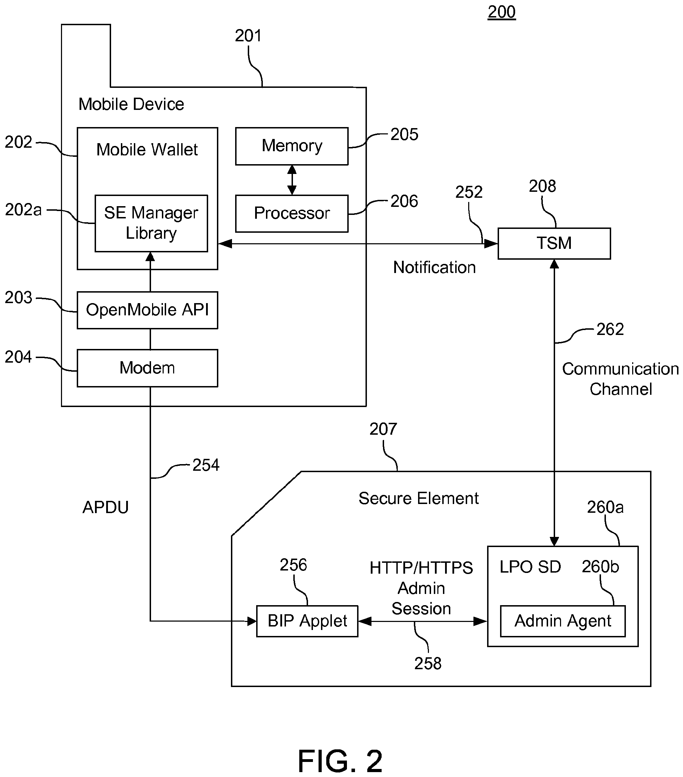

FIG. 2 depicts a diagram 200 of a mobile device having a secure element for use in remote transactions according to an exemplary embodiment. It should be understood that the secure element may be implemented in different form factors, including as a cloud-based or virtual secure element external to the mobile device (*e*.*g*., host card emulation (HCE)).

As shown in FIG. 2, mobile device 201 (*e*.*g*., FIG. 1, mobile device 104-1) includes a mobile wallet 202, secure element 207 (*e*.*g*., FIG. 1, secure element 104a-1), an OpenMobile API 203, a modem 204, a memory 205, and a processor 206.

In one exemplary embodiment, the mobile wallet 202 is a mobile wallet application that includes instructions which, when executed by the processor 206 of the mobile device 201, cause the mobile device to act as an instrument, for example, for processing transactions such as contactless transactions (e.g., NFC contactless payments). The mobile wallet 202 provides an interface for receiving inputs and displaying outputs. The mobile wallet 202 communicates with the secure element 207 and applets stored on the secure element 207 using commands transmitted via interfaces such as application programming interfaces (APIs).

The mobile wallet 202 also includes a secure element manager library (SE manager library) 202a. The SE manager library 202a provides the mobile wallet 202 with means to communicate with other systems (e.g., server) using, for example, high-level APIs.

OpenMobile API provides a set of service layer classes with high-level methods for secure element operations. OpenMobile API Specification (e.g., Version 3.0) specifies how mobile applications may access different secure elements in a mobile device, such as a UICC or an embedded secure element, and provides interface definitions and Unified Modeling Language (UML) diagrams to support implementation across a variety of mobile platforms and programming languages. In one example, a Secure Element Evaluation Kit (SEEK) layer may be used as the OpenMobile API. SEEK layer is a software layer that provides a mechanism for an application to communicate with secure elements, SIM cards, or other device encryption modules (e.g., secure element 207).

Modem 204 is a cellular baseband modem that is used for wireless communications. Mobile devices typically support a number of cellular protocols including GSM, 3G, 4G and LTE. Often, these protocols require a significant amount of CPU power to interpret, process and generate packets which are transmitted to a network provider. This processing is handled by the modem 204, which is a separate chip included in the mobile device that communicates with the main processor 206 and/or the memory 205 (*e*.*g*., a multimode LTE modem "SC9620," designed for use in 4G smartphones).

Modem 204 is responsible for setting up a connection to a secure element in a mobile device. This connection uses remote communication technology, such as GPRS (General Packet Radio Service), UMTS (Universal Mobile Telecommunications System), or CDMA (Code Division Multiple Access).

Although not illustrated in FIG. 2, the mobile device 201 may also include a contactless frontend (CLF) and a user interface such as a display. A CLF is circuitry which handles the analog aspect of contactless or NFC communications and the communication protocol layers of a contactless transmission link.

The secure element 207 includes or has stored thereon a first applet and a second applet. The first applet is used to communicate with the second applet. In one embodiment, the first applet is a Bearer Independent Protocol (BIP) applet 256, and the second applet is an Admin Agent applet 260b, which is stored in a Link Platform Operator Security Domain (LPO SD) 260a in the secure element 207.

The Administration Agent (Admin Agent) 260b is an applet that manages communications from the secure element 207 and other systems such as a TSM (*e*.*g*., FIG. 2, TSM 208; FIG. 1, central TSM 103). The LPO SD 260a stores, manages and hosts keys for encrypting and/or decrypting data sent to and received from other systems, such as the TSM. It should be understood that the Admin Agent 260b and LPO SD 260a may act together or separately to manage a connection from the secure element 207 to other systems. It should also be understood that the Admin Agent 206b may be implemented within or outside of the LPO SD 260a.

The communication methods used by the LPO SD 260a typically are standardized by the European Telecommunications Standards Institute (ETSI). The ETSI prescribes a specification for the LPO SD 260a in which a communication channel is established using binary SMS messages, such as binary class 2 SMS messages.

Binary class 2 SMS messages are messages directed to and/or received from secure elements, and may be stored on secure elements. The binary SMS message is provided to the secure element 207 using a card application toolkit *(e.g.,* SIM Application Toolkit (STK)) command such as an ENVELOPE (*e*.*g*., SMS-PP DOWNLOAD) command sent over-the-air. An ENVELOPE is a communication used to inform a secure element of an event that is occurring. An external entity (e.g., TSM 208) has the ability to push the binary SMS message to the mobile device 201 to establish the connection. The user, mobile device, and/or system initiating the delivery of the binary SMs message is/are not notified of the receipt of the binary SMS message by the mobile device 201. In addition, the LPO SD 260a do not establish channels of communication between the secure element 207 and other systems using APDUs (*e*.*g*., command APDU).

The BIP applet 256 serves as a proxy between the mobile device 201 and LPO SD 260a, via which APDU messages may be sent and received to establish communications channels between the secure element 207 and other systems. Unlike binary SMS messages (*e*.*g*., class 2 messages), a response message in the form of a response APDU is sent and/or returned to a system and/or entity that transmitted the APDU. That is, binary SMS messages do not provide for tracking, managing and/or receiving updates regarding the status of the SMS message and the information communicated therein.

Although not illustrated in FIG. 2, the secure element 207 may also include additional applets such as one or more payment applets and commerce applets. A commerce applet may operate as a storage container and an interface for offer data management, and may be used, for example, to redeem an offer during a remote transaction. A payment applet corresponds to a service provider, and may store sensitive service provider data, such as transaction data (*e*.*g*., account number, account verification code, account holder name, expiration date) associated with a service provider account issued to a consumer. In one exemplary embodiment, a payment applet may be used to make contactless payments using a mobile wallet.

### Process

### C. Establishing Communication Channel

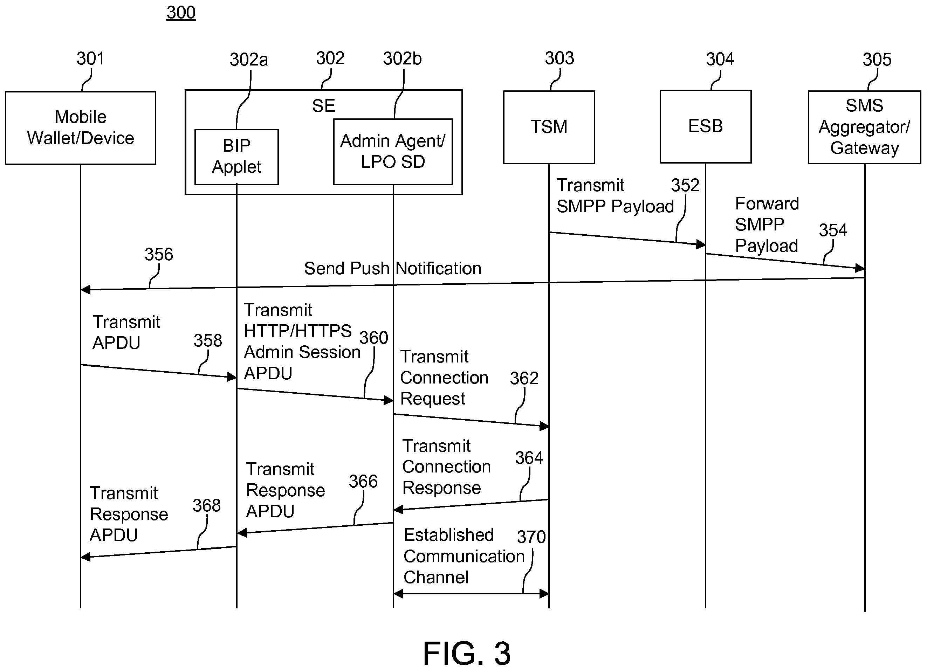

FIG. 3 is a sequence diagram illustrating a sequence for establishing a communication channel according to an exemplary embodiment.

When an action is to be performed on a secure element, a communication channel is established between the secure element and the system requesting the action. The secure element and system requesting the action in turn communicate over the established channel to perform the action. The action may include a number of different requests for processing such as installing a payment application, activating a mobile wallet, changing a passcode, and the like.

In one exemplary embodiment shown in FIG. 3, a communication channel is established between a TSM 303 (*e*.*g*., FIG. 1, central TSM 103) and a secure element 302 (*e*.*g*., FIG. 1, secure element 104a; FIG. 2, secure element 207). The communication channel may be used to communicate a request for an action to be performed on the secure element 302.

At step 352, the TSM 303 transmits a message to the ESB 304 (*e*.*g*., FIG. 1, ESB 101). The message may be an SMPP message including payload data. The payload data includes at least a host address (*e*.*g*., an identifier or location in the LPO SD where the message is to be sent to), a recipient internet protocol (IP) address (*e*.*g*., an IP address of the TSM where the handset is to be connected to), and an identification number (*e*.*g*., an identifier for a workflow indicating that the TSM is ready). The payload data may also include, for example, the internet protocol to be used during the established connection (*e.g*., IPv4, IPv6).

At step 354, the ESB 304 receives the message from the TSM 303 and forwards the message including the payload data to a message aggregator such as an SMS aggregator 305. Although not illustrated in FIG. 3, the ESB 304 may convert the message from SMPP format to HTTP format.

In turn, an SMS aggregator 305 or similar administrative system sends, at step 356, a push notification to the mobile wallet (*e*.*g*., mobile wallet application) deployed on the mobile device 301 (*e*.*g*., FIG. 1, mobile device 104-1). The push notification sent at step 356 may include at least a portion of the payload data sent by the TSM 303 at step 352.

The SMS aggregator is used to aggregate SMS messages for transmission to one or more recipients. The SMS aggregator provides connectivity to a variety of systems or devices on a mobile network, and manages the sending and receiving of SMS messages to and from devices across a variety of different wireless service provider networks, each of which may be using a different communication protocol.

The SMS aggregator may include one or more gateways that are each configured to communicate with cellular base stations operated by various service providers using the appropriate communication protocols for each service provider.

The push notification sent at step 356 is used to transmit notifications and/or information to systems and/or users. Such notifications may be, for example, notifications regarding an action to be taken on the secure element. The push notification sent at step 356 includes information identifying the host address, the recipient internet protocol (IP) address, and the identification number.

A notification of an action to be performed on the secure element 302 is received at the mobile wallet 301 either by a "push" or "pull" action.

In a "push" action, a trusted service manager (*e*.*g*., TSM 303) initiates a transaction by sending a notification (*e*.*g*., pushing) to a wallet application (*e*.*g*., FIG. 3, mobile wallet 301) on a consumer device (*e*.*g*., mobile device). In a "pull" action, the transaction is initiated by a mobile device transmitting a request for information (*e*.*g*., pulling).

At step 358, the mobile wallet 301 transmits, an APDU (*e*.*g*., trigger or command APDU) to a first applet (*e*.*g*., FIG. 3 at 302a) on the secure element (*e*.*g*., FIG. 3 at 302).

APDUs are communication units used to exchange information between systems and secure elements (*e*.*g*., secure element 302). Generally, there are two categories of APDUs: a command APDU and a response APDU. The format and standards for APDUs are defined by ISO/IEC 7816 standards, managed jointly by the International Organization for Standardization (ISO) and the International Electrotechnical Commission (IEC).

In an exemplary embodiment shown in FIG. 3, the first applet is a Bearer Independent Protocol (BIP) applet 302a. A BIP is a technology in mobile communication, such an applet, which provides a secure element with access to data and/or services through any of (and independent of) the data bearers (*e*.*g*., 3G, 4G, LTE) supported by the mobile device. A bearer service is a service that allows transmission of information signals between network interfaces. Bearer services range from the transfer of low speed messages (*e*.*g*., 300 bps) to high speed data signals (*e*.*g*., 10+ Gbps).

The APDU transmitted at step 360 includes instructions to establish a communication channel, such as an HTTP or HTTPS session with the TSM 303.

HTTP or HTTPS session status counters are maintained and or stored by the BIP applet 302a and/or the Admin Agent 302b to count the occurrence of certain events, including: (1) a number of times an HTTP or HTTPS session initiation is requested, (2) a number of times no error is reported when an HTTP or HTTPS session is requested, (3) a number of times an error is reported when an HTTP or HTTPS session is requested, and (4) a number of times no report is found at all when an HTTP or HTTPS session is requested.

The information contained in an APDU (*e*.*g*., at step 358, 360) includes hexadecimal data representing a header (*e*.*g*., including CLA, INS) and a body of the message of variable length (*e*.*g*., including Lc, data, Le).

An example structure of the APDU transmitted at step 360, which establishes the HTTP or HTTPS Admin Session, including the parameters passed in the APDU sent step 358, is described in more detail below in Table 1.

**Table 1**

| **Field name** | **Description** |
|---|---|
| CLA | Class of instruction - indicates the type of command |
| INS | Instruction code - indicates the specific command For example: |
| | • Establish communication channel |
| | • Read HTTP or HTTPS status counter values |
| Command Data | Information carried by or included in the command |
| Lc | Length of data body in hexadecimal bytes |
| Le | Expected length of return data in hexadecimal bytes |

At step 360, the BIP applet 302a transmits an APDU (*e*.*g*., HTTP or HTTPS Admin Session APDU) to the Admin Agent 302b. The APDU transmitted at step 360 includes a request to establish an HTTP or HTTPS Admin Session and an HTTP or HTTPS session is triggered. The HTTP or HTTPS Admin Session APDU includes trigger parameters, which are passed to a second applet (*e*.*g*., Admin Agent applet) on the secure element (*e*.*g*., FIG. 3, step 302). The HTTP or HTTPS Admin Session APDU may include one or more of the following parameters (*e*.*g*., trigger parameters): a host address, a recipient IP address, and an identification number, which are used to process the connection request at step 362.

In an exemplary embodiment, the Admin Agent and LPO SD 302b work concurrently.

The Admin Agent is a component that is capable of managing an OTA, over HTTP or HTTPS, connection between a security domain (*e*.*g*., LPO SD 302b) and a first device (*e*.*g*., TSM 303).

At step 362, the Admin Agent 302b transmits a connection request including the trigger parameters to the TSM 303.

In turn, the TSM 303 performs an authentication process using an authentication protocol such as a SSL (Secure Sockets Layer) and/or a TLS (Transport Layer Security) handshake protocol. The authentication process includes a client sending a message to a server and the server responding with information needed to authenticate itself. The client and server agree on various parameters used to establish the security of the connection.

At the conclusion of the authentication process, if successful, a handshake procedure is completed and session keys are exchanged between the secure element 302 and the TSM 303, which can in turn communicate securely using agreed-upon session keys. This concludes the handshake and begins the secured connection.

The TSM 303, in turn, processes the connection request and transmits, at step 364, a connection response to the Admin Agent 302b. The connection response indicates, for example, whether the connection, channel and/or session requested at step 360 was successfully established.

The Admin Agent 302b receives a connection response from the TSM 303 and, in turn, at step 366, transmits a response APDU to the BIP applet 302a on the secure element 302. The response APDU includes at least a portion of the connection response information received at step 364. In turn, the BIP applet 302a transmits the response APDU, at step 368, to the mobile wallet 301.

The APDU protocol used to create and transmit messages (*e*.*g*., requests, commands, responses) provides messages and information that can be used to track and or manage the progress of an action requested in an APDU. For example, the response APDU includes information in the form of data and status words (*e*.*g*., SW1, SW2) indicating the result (*e*.*g*., success, failure) of the execution of the command APDU (*e*.*g*., whether a communication channel was established successfully).

The information contained in a response APDU (*e*.*g*., the response APDUs transmitted in steps 366 and 368) includes hexadecimal data representing a body of variable length and two following bytes (*e*.*g*., status bytes SW1 and SW2).

An example structure of the response APDU is described in more detail below in Table 2.

**Table 2**

| **Field Name** | **Description** |
|---|---|
| Response Data | Information included in and/or carried by a response |
| | For example: |
| | • Applet version number |
| | • Count of times HTTP or HTTPS session is requested |
| | • Count of times HTTP or HTTPS Session No Error is reported |
| | • Count of times HTTP or HTTPS session Error is reported |
| | • Count of times no report for HTTP or HTTPS session is found |
| SW1, SW2 | Command processing status |
| | For example: |
| | • '90' '00': a successful execution of the APDU |
| | • '62' '02': an unsuccessful execution of the APDU |

This command-response message pair (e.g., command APDU, response APDU) allows the mobile device 301 (or secure element 302) and the TSM 303 (or any other system seeking to establish a communication channel), via Admin Agent 302b, to establish a secure communication channel).

The communication channel may be established upon request, for example, by the Admin Agent 302b to a modem or other component (e.g., antenna) of the mobile device on which the Admin Agent 302b is deployed. Once the communication channel (*e*.*g*., FIG. 2 at 262) is established, at step 370, between the secure element 302 and the TSM 303, information (*e*.*g*., encrypted APDUs) may be transmitted securely between them.

If the communication channel disconnects or an error occurs during delivery of the APDU message, the TSM 303 may reattempt to connect to the BIP applet 302a and resend any data by repeating steps 352 to 368.

If the session continues to disconnect or the error persists during the transmission of the data after a predetermined number (*e*.*g*., three) of tries, the TSM 303 will log the attempt as a failure and notification of the failure is sent to involved systems (*e*.*g*., SE 302, mobile wallet 301).

If the data is successfully received by the SE 302, the Admin Agent 302b may transmit the data to the BIP applet 302a, at step 366, via a response APDU. The response APDU is provided, in turn, at step 368, to the mobile wallet 301. A response APDU is returned to the system and/or entity that transmitted the command APDU (*e*.*g*., to the secure element 302), either confirming that the communication channel was established successfully (e.g., with status words '90' '00' indicating a successful execution of the APDU), or informing the mobile device that the communication channel could not be established.

The BIP applet 302a allows for content that is traditionally sent as a binary (*e*.*g*., class 2) SMS message, by an OTA operation, to be delivered via an APDU. By virtue of using APDUs, a system device can validate whether a message has arrived at the secure element 302, for example, through the receipt of response APDUs. A system or device can also determine whether the Admin Agent and/or LPO SD 302b has successfully created a channel with the TSM 303, or whether a problem occurred in the process.

In one example embodiment, the BIP applet 302a is able to query the Admin Agent 302b to determine whether a communication channel was established successfully (e.g., with TSM 303) without the need to rely on intermediary sources such as an MNO carrier, for example, to send a push notification.

### D. Push or Pull Actions

A communication session can be initiated by either a "push" or "pull" action.

Depending on the type of use case, either a push action from the TSM or a trigger from the mobile wallet (*e*.*g*., mobile wallet application) for a pull action is performed.

For some use cases (*e*.*g*., wallet activation), fetching (*e*.*g*., pulling) trigger parameters from the wallet server is the preferred option. For other use cases (*e*.*g*., lost phone), the push option for receiving trigger parameters through a push notification server (*e*.*g*., Google Cloud Messaging (GCM) or Apple Push Notification Server (APNS)) may be preferable.

Actionable items (*e*.*g*., uses cases) and their corresponding preferred triggering method are shown in more detail below in Table 3.

**Table 3**

| **Use Case** | **Preferred Action** |
|---|---|
| Wallet activation | Pull |
| Card provisioning (*e.g*., add card) | Pull |
| Close card | Push |
| Reset wallet PIN | Pull |
| Reset consumer portal PIN | Push |
| Handset and/or OS change | Pull |
| Secure element change | Push |
| Terminate wallet | Push |
| Suspend wallet | Push |
| Resume wallet | Push |
| Applet update | Pull |
| Suspend card | Push |
| Resume card | Push |

### E. Example Computer-Readable Implementation

The example embodiments described above such as, for example, the systems and procedures depicted in or discussed in connection with FIGs. 1-3 or any part or function thereof, may be implemented by using hardware, software or a combination of the two. The implementation may be in one or more computers or other processing systems. While manipulations performed by these example embodiments may have been referred to in terms commonly associated with mental operations performed by a human operator, no human operator is needed to perform any of the operations described herein. In other words, the operations may be completely implemented with machine operations. Useful machines for performing the operation of the example embodiments presented herein include general purpose digital computers or similar devices.

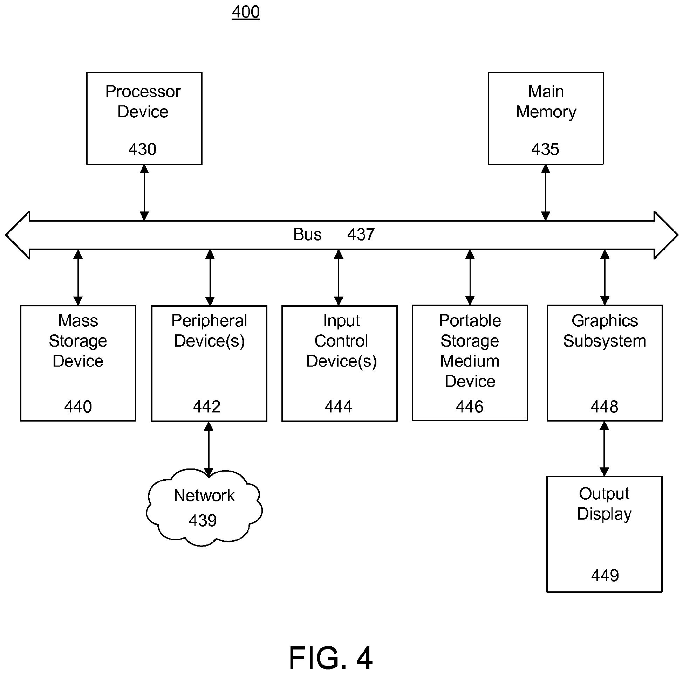

FIG. 4 is a block diagram of a general and/or special purpose computer 400, in accordance with some of the example embodiments of the invention. The computer 400 may be, for example, a user device, a user computer, a client computer and/or a server computer, among other things.

The computer 400 may include without limitation a processor device 430, a main memory 435, and an interconnect bus 437. The processor device 430 may include without limitation a single microprocessor, or may include a plurality of microprocessors for configuring the computer 400 as a multi-processor system. The main memory 435 stores, among other things, instructions and/or data for execution by the processor device 430. The main memory 435 may include banks of dynamic random access memory (DRAM), as well as cache memory.

The computer 400 may further include a mass storage device 440, peripheral device(s) 442, portable storage medium device(s) 446, input control device(s) 444, a graphics subsystem 448, and/or an output display 449. For explanatory purposes, all components in the computer 400 are shown in FIG. 4 as being coupled via the bus 437. However, the computer 400 is not so limited. Devices of the computer 400 may be coupled via one or more data transport means. For example, the processor device 430 and/or the main memory 435 may be coupled via a local microprocessor bus. The mass storage device, 440, peripheral device(s) 442, portable storage medium device(s) 446, and/or graphics subsystem 448 may be coupled via one or more input/output (I/O) buses. The mass storage device 440 may be a nonvolatile storage device for storing data and/or instructions for use by the processor device 430. The mass storage device 440 may be implemented, for example, with a magnetic disk drive or an optical disk drive. In a software embodiment, the mass storage device 440 is configured for loading contents of the mass storage device 440 into the main memory 435.

The portable storage medium device 446 operates in conjunction with a nonvolatile portable storage medium, such as, for example, a compact disc read only memory (CD-ROM), to input and output data and code to and from the computer 400. In some embodiments, the software for storing an internal identifier in metadata may be stored on a portable storage medium, and may be inputted into the computer 400 via the portable storage medium device 446. The peripheral device(s) 442 may include any type of computer support device, such as, for example, an input/output (I/O) interface configured to add additional functionality to the computer 400. For example, the peripheral device(s) 442 may include a network interface card for interfacing the computer 400 with a network 439.

The input control device(s) 444 provide a portion of the user interface for a user of the computer 400. The input control device(s) 444 may include a keypad and/or a cursor control device. The keypad may be configured for inputting alphanumeric characters and/or other key information. The cursor control device may include, for example, a mouse, a trackball, a stylus, and/or cursor direction keys. In order to display textual and graphical information, the computer 400 may include the graphics subsystem 448 and the output display 449. The output display 449 may include a cathode ray tube (CRT) display and/or a liquid crystal display (LCD). The graphics subsystem 448 receives textual and graphical information, and processes the information for output to the output display 449.

Each component of the computer 400 may represent a broad category of a computer component of a general and/or special purpose computer. Components of the computer 400 are not limited to the specific implementations provided here.

Portions of the example embodiments of the invention may be conveniently implemented by using a conventional general purpose computer, a specialized digital computer and/or a microprocessor programmed according to the teachings of the present disclosure, as is apparent to those skilled in the computer art. Appropriate software coding may readily be prepared by skilled programmers based on the teachings of the present disclosure.

Some embodiments may also be implemented by the preparation of application-specific integrated circuits, field programmable gate arrays, or by interconnecting an appropriate network of conventional component circuits.

Some embodiments include a computer program product. The computer program product may be a storage medium or media having instructions stored thereon or therein which can be used to control, or cause, a computer to perform any of the procedures of the example embodiments of the invention. The storage medium may include without limitation a floppy disk, a mini disk, an optical disc, a Blu-ray Disc, a DVD, a CD-ROM, a micro-drive, a magnetooptical disk, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer readable medium or media, some implementations include software for controlling both the hardware of the general and/or special computer or microprocessor, and for enabling the computer or microprocessor to interact with a human user or other mechanism utilizing the results of the example embodiments of the invention. Such software may include without limitation device drivers, operating systems, and user applications. Ultimately, such computer readable media further include software for performing example aspects of the invention, as described above.

Included in the programming and/or software of the general and/or special purpose computer or microprocessor are software modules for implementing the procedures described above.

While various example embodiments of the invention have been described above, it should be understood that they have been presented by way of example, and not limitation. It is apparent to persons skilled in the relevant art(s) that various changes in form and detail can be made therein. Thus, the invention should not be limited by any of the above described example embodiments, but should be defined only in accordance with the following claims.

## Claims

1. A system (100) for managing communications, including a secure element comprising:
a memory having stored thereon a first applet and a second applet, the first applet being operable to receive and transmit application protocol data unit, APDU, messages; and
a processor coupled to the memory, the processor being operable to:
receive from a mobile device (104, 201), by the first applet, a first APDU message, the first APDU message including payload data,
transmit the first APDU message from the first applet to the second applet, and
establish, by the second applet, a communication channel with a first device,
wherein the payload data includes at least one of a host address, a recipient internet protocol address and an identification number,
**characterized in that**
(i) the first device is a trusted service manager, TSM, (103), and the communication channel is used to exchange communications, including messages, to and from the TSM (103), and
(ii) the communication channel is a Bearer Independent Protocol, BIP, channel, and
(iii) the first APDU message includes instructions to initiate a Hypertext Transfer Protocol, HTTP, or a Hypertext Transfer Protocol Secure, HTTPS, session with the first device.

2. The system (100) of Claim 1, wherein the first applet is operable to manage and store HTTP or HTTPS session status counters indicating: (1) a number of times an HTTP or HTTPS session initiation is requested, (2) a number of times no error is reported when an HTTP or HTTPS session is requested, (3) a number of times an error is reported when an HTTP or HTTPS session is requested, and (4) a number of times no report is found when an HTTP or HTTPS session is requested.

3. The system (100) of Claim 1,
(i) wherein the processor is further operable to transmit to the mobile device (104, 201), in response to the first APDU message, a second APDU message including information indicating whether the communication channel was established successfully, and/or
(ii) wherein the first applet is operable to query the second applet to determine whether the communication channel was established successfully.

4. A method for managing communications in a system including a secure element, comprising the steps of:
receiving from a mobile device (104, 201), by a first applet on the secure element, a first application protocol data unit, APDU, message, the first APDU message including payload data;
transmitting the first APDU message from the first applet to a second applet within the secure element; and
establishing, by the second applet, a communication channel with a first device,
wherein the payload data includes at least one of a host address, a recipient internet protocol address and an identification number,
**characterized in that**
(i) the first device is a trusted service manager, TSM, (103), and the communication channel is used to exchange communications, including messages, to and from the TSM (103), and
(ii) the communication channel is a Bearer Independent Protocol, BIP, channel, and
(iii) the first APDU message includes instructions to initiate a Hypertext Transfer Protocol, HTTP, session or a Hypertext Transfer Protocol Secure, HTTPS, with the first device.

5. The method of Claim 4, wherein the first applet is operable to manage and store HTTP or HTTPS session status counters indicating: (1) a number of times an HTTP or HTTPS session initiation is requested, (2) a number of times no error is reported when an HTTP or HTTPS session is requested, (3) a number of times an error is reported when an HTTP or HTTPS session is requested, and (4) a number of times no report is found when an HTTP or HTTPS session is requested.

6. The method of Claim 4, further comprising a step of transmitting to the mobile device (104, 201), in response to the first APDU message, a second APDU message including information indicating whether the communication channel was established successfully, and/or
wherein the first applet is operable to query the second applet to determine whether the communication channel was established successfully.

7. A non-transitory computer-readable medium having stored thereon sequences of instructions, the sequences of instructions including instructions, which, when executed by a computer used in a system for implementing a secure element, cause the computer to:
receive from a mobile device (104, 201), by a first applet, a first application protocol data unit, APDU, message;
transmit the first APDU message from the first applet to a second applet; and
establish, by the second applet, a communication channel with a first device,
wherein the payload data includes at least one of a host address, a recipient internet protocol address and an identification number,
**characterized in that**
(i) the first device is a trusted service manager, TSM, (103), and the 15 communication channel is used to exchange communications, including messages, to and from the TSM (103), and/or
(ii) the communication channel is a Bearer Independent Protocol, BIP, channel,
and/or
the first APDU message includes instructions to initiate a Hypertext Transfer Protocol, HTTP, or a Hypertext Transfer Protocol Secure, HTTPS, session with the first device.

8. The computer-readable medium of Claim 7, wherein the first applet is operable to manage and store HTTP or HTTPS session status counters indicating: (1) a number of times an HTTP or HTTPS session initiation is requested, (2) a number of times no error is reported when an HTTP or HTTPS session is requested, (3) a number of times an error is reported when an HTTP or HTTPS session is requested, and (4) a number of times no report is found when an HTTP or HTTPS session is requested.

9. The computer-readable medium of Claim 7, the sequence of instructions further includes instructions which, when executed by the computer, cause the computer to transmit to the mobile device (104, 201), in response to the first APDU message, a second APDU message including information indicating whether the communication channel was established successfully.

10. The computer-readable medium of Claim 7, wherein the first applet is operable to query the second applet to determine whether the communication channel was established successfully.

## Patentansprüche

1. System (100) zur Verwaltung von Kommunikation, das ein sicheres Element beinhaltet, umfassend:
einen Speicher, auf dem ein erstes Applet und ein zweites Applet gespeichert sind, wobei das erste Applet verwendet werden kann, um Anwendungsprotokoll-Dateneinheit, APDU, Nachrichten zu empfangen und zu senden; und
einen Prozessor, der mit dem Speicher gekoppelt ist, wobei der Prozessor verwendet werden kann, um:
von einem Mobilgerät (104, 201), durch das erste Applet, eine erste APDU-Nachricht zu empfangen, wobei die erste APDU-Nachricht Nutzlastdaten beinhaltet,
die erste APDU-Nachricht vom ersten Applet zum zweiten Applet zu senden, und
durch das zweite Applet einen Kommunikationskanal mit einem ersten Gerät aufzubauen,
wobei die Nutzlastdaten mindestens eines einer Hostadresse, einer Empfänger-Internetprotokolladresse und einer Identifizierungsnummer beinhalten,
**dadurch gekennzeichnet, dass**
(i) das erste Gerät ein Trusted Service Manager, TSM, (103), ist und der Kommunikationskanal verwendet wird, um Kommunikationen, einschließlich Nachrichten, zu und vom TSM (103) auszutauschen, und
(ii) der Kommunikationskanal ein trägerunabhängiger Protokoll (BIP)-Kanal ist, und
(iii) die erste APDU-Nachricht Anweisungen zum Initiieren einer Hypertext Transfer Protocol, HTTP, oder einer Hypertext Transfer Protocol Secure, HTTPS, Sitzung mit dem ersten Gerät beinhaltet.

2. System (100) nach Anspruch 1, wobei das erste Applet verwendet werden kann, um HTTP- oder HTTPS-Sitzungsstatus-Zähler zu verwalten und zu speichern, die angeben: (1) wie oft die Initiierung einer HTTP- oder HTTPS-Sitzung angefordert wird, (2) wie oft kein Fehler gemeldet wird, wenn eine HTTP- oder HTTPS-Sitzung angefordert wird, (3) wie oft ein Fehler gemeldet wird, wenn eine HTTP- oder HTTPS-Sitzung angefordert wird, und (4) wie oft keine Meldung gefunden wird, wenn eine HTTP- oder HTTPS-Sitzung angefordert wird.

3. System (100) nach Anspruch 1,
(i) wobei der Prozessor ferner verwendet werden kann, um zum Mobilgerät (104, 201), in Reaktion auf die erste APDU-Meldung, eine zweite APDU-Meldung zu senden, die Informationen beinhaltet, die angeben, ob der Kommunikationskanal erfolgreich aufgebaut wurde, und/oder
(ii) wobei das erste Applet verwendet werden kann, um das zweite Applet abzufragen, um zu ermitteln, ob der Kommunikationskanal erfolgreich aufgebaut wurde.

4. Verfahren zum Verwalten der Kommunikation in einem System, das ein sicheres Element beinhaltet, folgende Schritte umfassend:
Empfangen von einem Mobilgerät (104, 201), durch ein erstes Applet am sicheren Element, einer ersten Anwendungsprotokoll-Dateneinheit, APDU, Nachricht, wobei die erste APDU-Nachricht Nutzlastdaten beinhaltet;
Senden der ersten APDU-Nachricht vom ersten Applet zum zweiten Applet innerhalb des sicheren Elements; und
Aufbauen, durch das zweite Applet, eines Kommunikationskanals mit einem ersten Gerät,
wobei die Nutzlastdaten mindestens eines einer Hostadresse, einer Empfänger-Internetprotokolladresse und einer Identifizierungsnummer beinhalten,
**dadurch gekennzeichnet, dass**
(i) das erste Gerät ein Trusted Service Manager, TSM, (103) ist und der Kommunikationskanal verwendet wird, um Kommunikationen, einschließlich Nachrichten, zu und vom TSM (103) auszutauschen, und
(ii) der Kommunikationskanal ein trägerunabhängiger Protokoll, BIP, Kanal ist, und
(iii) die erste APDU-Nachricht Anweisungen zum Initiieren einer Hypertext Transfer Protocol, HTTP, oder einer Hypertext Transfer Protocol Secure, HTTPS, Sitzung mit dem ersten Gerät beinhaltet.

5. Verfahren nach Anspruch 4, wobei das erste Applet verwendet werden kann, um HTTP- oder HTTPS-Sitzungsstatus-Zähler zu verwalten und zu speichern, die angeben: (1) wie oft die Initiierung einer HTTP- oder HTTPS-Sitzung angefordert wird, (2) wie oft kein Fehler gemeldet wird, wenn eine HTTP- oder HTTPS-Sitzung angefordert wird, (3) wie oft ein Fehler gemeldet wird, wenn eine HTTP- oder HTTPS-Sitzung angefordert wird, und (4) wie oft keine Meldung gefunden wird, wenn eine HTTP- oder HTTPS-Sitzung angefordert wird.

6. Verfahren nach Anspruch 4, ferner umfassend einen Schritt des Sendens zum Mobilgerät (104, 201), in Reaktion auf die erste APDU-Meldung, einer zweiten APDU-Meldung, die Informationen beinhaltet, die angeben, ob der Kommunikationskanal erfolgreich aufgebaut wurde, und/oder
wobei das erste Applet verwendet werden kann, um das zweite Applet abzufragen, um zu ermitteln, ob der Kommunikationskanal erfolgreich aufgebaut wurde.

7. Nicht flüchtiges, computerlesbares Medium, auf dem Sequenzen von Anweisungen gespeichert sind, wobei die Sequenzen von Anweisungen Anweisungen beinhalten, die, wenn sie durch einen Computer ausgeführt werden, der in einem System für das Implementieren eines sicheren Elements verwendet wird, den Computer veranlassen:
von einem Mobilgerät (104, 201), durch ein erstes Applet, eine erste Anwendungsprotokoll-Dateneinheit, APDU, Nachricht zu empfangen;
die erste APDU-Nachricht vom ersten Applet zu einem zweiten Applet zu senden; und
durch das zweite Applet einen Kommunikationskanal mit einem ersten Gerät aufzubauen,
wobei die Nutzlastdaten mindestens eines einer Hostadresse, einer Empfänger-Internetprotokolladresse und einer Identifizierungsnummer beinhalten,
**dadurch gekennzeichnet, dass**
(i) das erste Gerät ein Trusted Service Manager TSM (103) ist und der Kommunikationskanal verwendet wird, um Kommunikationen, einschließlich Nachrichten, zu und vom TSM (103) auszutauschen, und/oder
(ii) der Kommunikationskanal ein trägerunabhängiger Protokoll, BIP, Kanal ist, und/oder
die erste APDU-Nachricht Anweisungen zum Initiieren einer Hypertext Transfer Protocol, HTTP, oder einer Hypertext Transfer Protocol Secure, HTTPS, Sitzung mit dem ersten Gerät beinhaltet.

8. Computerlesbares Medium nach Anspruch 7, wobei das erste Applet verwendet werden kann, um HTTP- oder HTTPS-Sitzungsstatus-Zähler zu verwalten und zu speichern, die angeben: (1) wie oft die Initiierung einer HTTP- oder HTTPS-Sitzung angefordert wird, (2) wie oft kein Fehler gemeldet wird, wenn eine HTTP- oder HTTPS-Sitzung angefordert wird, (3) wie oft ein Fehler gemeldet wird, wenn eine HTTP- oder HTTPS-Sitzung angefordert wird, und (4) wie oft keine Meldung gefunden wird, wenn eine HTTP- oder HTTPS-Sitzung angefordert wird.

9. Computerlesbares Medium nach Anspruch 7, wobei die Sequenz der Anweisungen ferner Anweisungen beinhaltet, die, wenn sie durch den Computer ausgeführt werden, den Computer veranlassen, zum Mobilgerät (104, 201), in Reaktion auf die erste APDU-Nachricht, eine zweite APDU-Nachricht zu senden, die angibt, ob der Kommunikationskanal erfolgreich aufgebaut wurde.

10. Computerlesbares Medium nach Anspruch 7, wobei das erste Applet verwendet werden kann, um das zweite Applet abzufragen, um zu ermitteln, ob der Kommunikationskanal erfolgreich aufgebaut wurde.

## Revendications

1. Système (100) pour la gestion des communications, incluant un élément sécurisé comprenant :
une mémoire sur laquelle sont stockées une première applet et une seconde applet, la première applet pouvant être utilisée pour recevoir et transmettre des messages, APDU, de l'unité de données de protocole d'application ; et
un processeur couplé à la mémoire, le processeur pouvant être utilisé pour :
recevoir d'un dispositif mobile (104, 201), par la première applet, un premier message APDU, le premier message APDU comprenant des données de charge utile,
transmettre le premier message APDU de la première applet à la seconde applet, et
établir, par la seconde applet, un canal de communication avec un premier dispositif,
dans lequel les données de charge utile comprennent au moins une adresse hôte, une adresse de protocole internet de destinataire et un numéro d'identification,
**caractérisé en ce que**
(i) le premier dispositif est un gestionnaire de services de confiance, TSM (103), et le canal de communication est utilisé pour échanger des communications, y compris des messages, vers et à partir du TSM (103), et
(ii) le canal de communication est un canal de Protocole Indépendant du Support, BIP, et
(iii) le premier message APDU comprend des instructions pour lancer une session de Protocole de Transfert Hypertexte, HTTP, ou de Protocole de Transfert Hypertexte Sécurisé, HTTPS, avec le premier dispositif.

2. Système (100) selon la revendication 1, dans lequel la première applet peut être utilisée pour gérer et stocker des compteurs d'état de session HTTP ou HTTPS indiquant : (1) un nombre de fois qu'une initiation de session HTTP ou HTTPS est demandée, (2) un nombre de fois qu'aucune erreur n'est signalée quand une session HTTP ou HTTPS est demandée, (3) un nombre de fois qu'une erreur est signalée quand une session HTTP ou HTTPS est demandée et (4) un nombre de fois qu'aucun rapport n'est trouvé lorsqu'une session HTTP ou HTTPS est demandée.

3. Système (100) selon la revendication 1,
(i) dans lequel le processeur peut en outre être utilisé pour transmettre au dispositif mobile (104, 201), en réponse au premier message APDU, un second message APDU comprenant des informations indiquant si le canal de communication a été établi avec succès, et/ou
(ii) dans lequel la première applet peut être utilisée pour interroger la seconde applet afin de déterminer si le canal de communication a été établi avec succès.

4. Procédé de gestion de communications dans un système comprenant un élément sécurisé, comprenant les étapes consistant en :
la réception d'un dispositif mobile (104, 201), par une première applet située sur l'élément sécurisé, d'une première message de l'unité de données de protocole d'application, APDU, le premier message APDU comprenant des données de charge utile ;
la transmission du premier message APDU de la première applet à une seconde applet dans l'élément sécurisé ; et
l'établissement, par la seconde applet, d'un canal de communication avec un premier dispositif,
dans lequel les données de charge utile comprennent au moins une adresse hôte, une adresse de protocole internet de destinataire et un numéro d'identification,
**caractérisé en ce que**
(i) le premier dispositif est un gestionnaire de services de confiance, TSM (103), et le canal de communication est utilisé pour échanger des communications, y compris des messages, vers et à partir du TSM (103), et
(ii) le canal de communication est un canal de Protocole Indépendant du Support, BIP, et
(iii) le premier message APDU comprend des instructions pour lancer une session de Protocole de Transfert Hypertexte, HTTP, ou de Protocole de Transfert Hypertexte Sécurisé, HTTPS, avec le premier dispositif.

5. Procédé selon la revendication 4, dans lequel la première applet peut être utilisée pour gérer et stocker des compteurs d'état de session HTTP ou HTTPS indiquant : (1) un nombre de fois qu'une initiation de session HTTP ou HTTPS est demandée, (2) un nombre de fois qu'aucune erreur n'est signalée quand une session HTTP ou HTTPS est demandée, (3) un nombre de fois qu'une erreur est signalée quand une session HTTP ou HTTPS est demandée et (4) un nombre de fois qu'aucun rapport n'est trouvé lorsqu'une session HTTP ou HTTPS est demandée.

6. Procédé selon la revendication 4, comprenant en outre une étape consistant en la transmission au dispositif mobile (104, 201), en réponse au premier message APDU, d'un second message APDU comprenant des informations indiquant si le canal de communication a été établi avec succès et/ou
dans lequel la première applet peut être utilisée pour interroger la seconde applet afin de déterminer si le canal de communication a été établi avec succès.

7. Support lisible par ordinateur non transitoire dans lequel des séquences d'instructions sont stockées, les séquences d'instructions comprenant des instructions, qui, lorsqu'elles sont exécutées par un ordinateur utilisé dans un système pour la mise en oeuvre d'un élément sécurisé, amènent l'ordinateur à :
recevoir d'un dispositif mobile (104, 201), par une première applet, un premier message d'unité de données de protocole d'application, APDU ;
transmettre le premier message APDU de la première applet à une seconde applet ; et
établir, par la seconde applet, un canal de communication avec un premier dispositif,
dans lequel les données de charge utile comprennent au moins une adresse hôte, une adresse de protocole internet de destinataire et un numéro d'identification,
**caractérisé en ce que**
(i) le premier dispositif est un gestionnaire de services de confiance, TSM (103), et le canal de communication est utilisé pour échanger des communications, y compris des messages, vers et à partir du TSM (103), et/ou
(ii) le canal de communication est un canal de Protocole Indépendant du Support, BIP, et/ou
le premier message APDU comprend des instructions pour lancer une session de Protocole de Transfert Hypertexte, HTTP, ou de Protocole de Transfert Hypertexte Sécurisé, HTTPS, avec le premier dispositif.

8. Support lisible par ordinateur selon la revendication 7, dans lequel la première applet peut être utilisée pour gérer et stocker des compteurs d'état de session HTTP ou HTTPS indiquant : (1) un nombre de fois qu'une initiation de session HTTP ou HTTPS est demandée, (2) un nombre de fois qu'aucune erreur n'est signalée quand une session HTTP ou HTTPS est demandée, (3) un nombre de fois qu'une erreur est signalée quand une session HTTP ou HTTPS est demandée et (4) un nombre de fois qu'aucun rapport n'est trouvé lorsqu'une session HTTP ou HTTPS est demandée.

9. Support lisible par ordinateur selon la revendication 7, la séquence d'instructions comprend en outre des instructions qui, lorsqu'elles sont exécutées par l'ordinateur, amènent l'ordinateur à transmettre au dispositif mobile (104, 201), en réponse au premier message APDU, un second message APDU comprenant des informations indiquant si le canal de communication a été établi avec succès.

10. Support lisible par ordinateur selon la revendication 7, dans lequel la première applet peut être utilisée pour interroger la seconde applet afin de déterminer si le canal de communication a été établi avec succès.
